# EUROPEAN PATENT APPLICATION

(11) **EP 1 106 471 A1**
(43) Date of publication of application: **13.06.2001**
(21) Application number: 99811133.0
(22) Date of filing: 10.12.1999
(51) Int. Cl.: B62B 1/18

(54) **Wheelbarrow with auxiliary wheel**

(71) Applicant: Togni, Claudio, 6596 Gordola (CH)
(72) Inventor: Togni, Claudio, 6596 Gordola (CH)
(74) Representative: Fiammenghi-Domenighetti, Delfina

(57) **Abstract**

A wheelbarrow (1) comprising a body (2) to which are fixed two handles (3, 4), a wheel (5) in a forward position and an auxiliary wheel (6) located on the opposite side of the body (2) on the same side as the said handles (3, 4) and attached to the wheelbarrow (1) in such a way that it can rotate about a substantially vertical axis (Z-Z), in which the said auxiliary wheel (6) has its axle (9) engaging in two vertical supports (7, 8) which are incorporated at their upper ends into a joint (10) comprising two parts (11, 12) which can rotate with respect to each other in an approximately horizontal plane, this joint (10) being connected reversibly in such a way that it can rotate in a vertical plane to a connecting member (13) which is capable of being secured to the said two handles (3, 4), the said joint (10) being provided with means (14) which can be operated manually so as to render the joint (10) and the said connecting member (13) reversibly fixed together, preventing relative rotation between them in a vertical plane, is described.

## Description

### Wheelbarrow with auxiliary wheel

This invention relates to the field of technology which is concerned with equipment for building, agriculture and gardening, and more particularly relates to the sector thereof involved in the manufacture of wheelbarrows.

As is well known, the latter represent an essential tool for the transport of loads of all kinds in a great variety of working situations, and with this object have been used in the greatest variety of forms for centuries hitherto.

An adverse feature of the type of transport in question lies in the fact that when in motion the operator must support part of the weight of a wheelbarrow and its load by two handles which are used to manoeuvre it and steer it in its movements.

When the load is heavy this places appreciable strain on the operator with the risk of injury to muscles, joints and the spine.

In order to overcome this disadvantage there have in the past been conceived wheelbarrows equipped with a second auxiliary wheel mounted in a rear position with respect to the body of the wheelbarrow which is intended to support the portion of the weight which would otherwise act on the operator.

In some of these wheelbarrows with an auxiliary wheel, such as for example those described in patent CH 253147 and patent application DE 3717580 A1, the auxiliary wheel is provided by means which allow it to rotate about a substantially vertical axis so that the wheelbarrow can easily follow any course in which the operator directs it.

However, even this more evolved type of wheelbarrow has some disadvantages which place significant limitations on its use; these disadvantages are essentially as follows: firstly the auxiliary wheel is fitted to the wheelbarrow in a virtually irreversible manner, with the disadvantage that it cannot easily be removed in situations where this results in the wheelbarrow having an excessively great height or overall dimensions in the plane of its supporting points.

Secondly it is not possible to remove the supporting effect of the auxiliary wheel temporarily when a special situation requires it, and then easily replace it as soon as the situation so permits.

The inventor of the invention to which this application relates has intended to provide a solution to the abovementioned problems, and has conceived a wheelbarrow with an auxiliary wheel in which the latter is connected to the wheelbarrow in such a way that it can be disengaged and engaged, either temporarily or permanently, in an easy and extremely quick manner.

The subject matter of this invention in fact comprises a wheelbarrow as described in the precharacterizing clause of attached Claim 1, characterized by the characterizing part of that claim.

A description in greater detail of some preferred embodiments of a wheelbarrow according to the invention will now be described, and in doing so reference will also be made to the appended drawings which show:
- in Figure 1, a perspective view of the rear part of a wheelbarrow with an auxiliary wheel according to the invention,
- in Figure 2, a plan view of the area to which a hook is applied which reversibly secures the auxiliary wheel to the wheelbarrow in its working position,
- in Figure 3, a perspective view of the rear part of a wheelbarrow with an auxiliary wheel according to the invention, in which the said hook is moved by means of a wire attached to a lever secured to one of the handles of the wheelbarrow,
- in Figure 4, a purely indicative sketch of the external appearance of a wheelbarrow according to the invention.

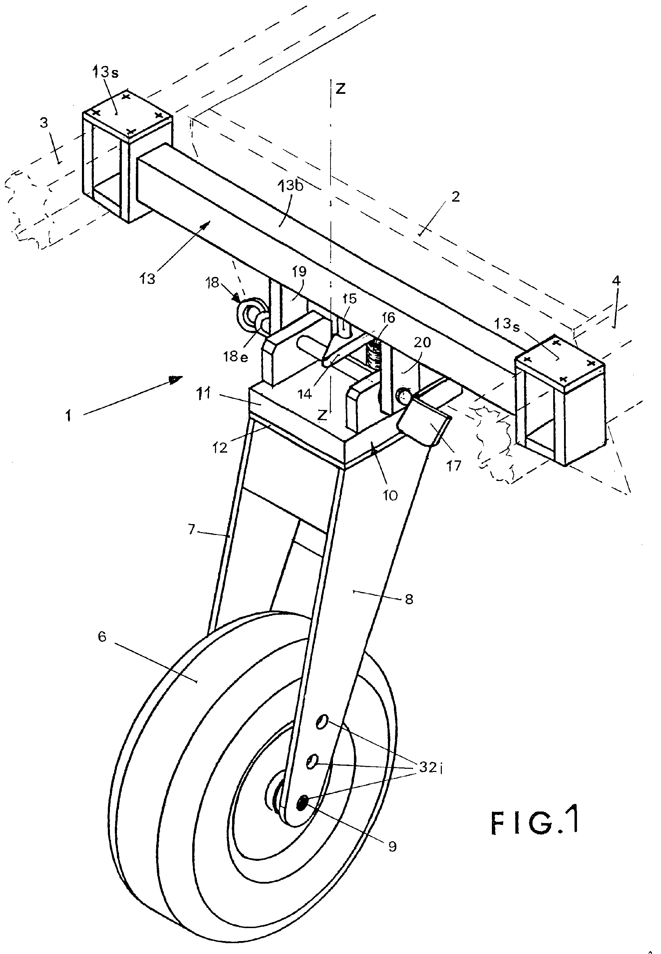

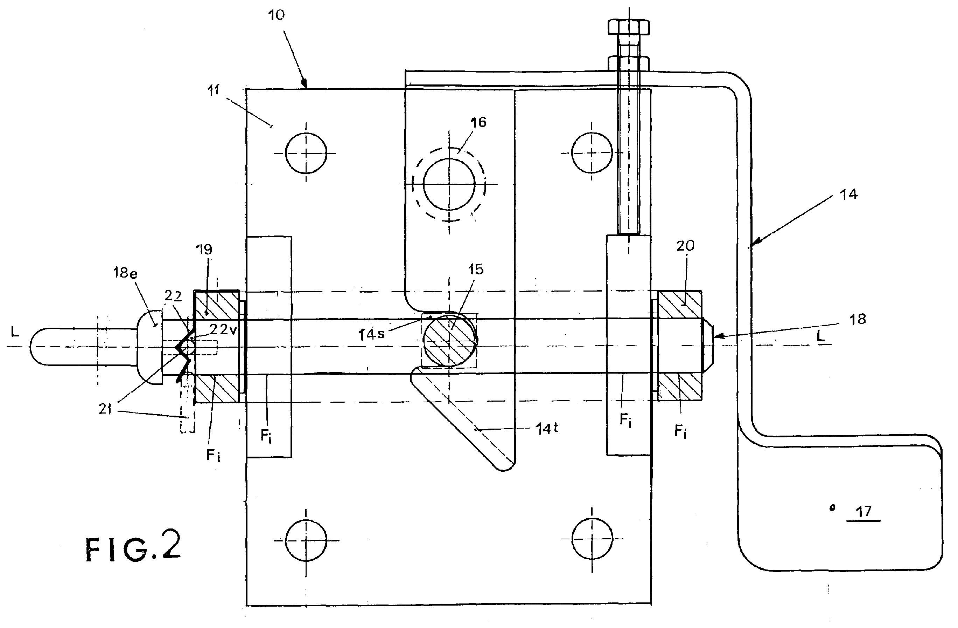

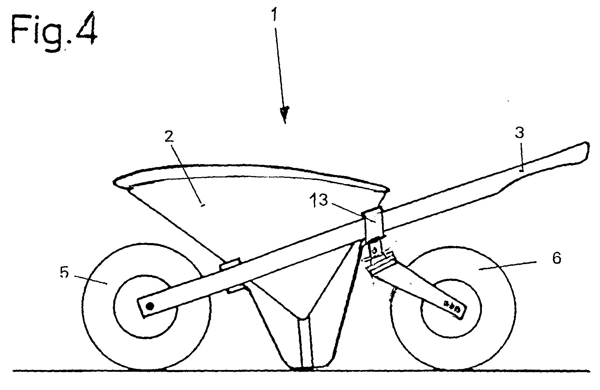

Considering Figures 1 and 2, these show how in a wheelbarrow 1 constructed in accordance with the invention as also shown in Figure 4 an auxiliary wheel 6 is applied to the area between the two handles 3, 4. Axle 9 for the rotation of said auxiliary wheel 6 is engaged in two vertical supports 7, 8 through holes 32i. It will be noted that there is a plurality of holes 32i, aligned along the longitudinal axis of each support, so as to permit axle 9 (and therefore also auxiliary wheel 6) to be positioned at different heights with respect to the wheelbarrow as a whole, so that an optimum distance between handles 3, 4 and the ground can be suitably selected on the basis of the physical conformation of the operator using wheelbarrow 1.

At their upper ends the said two vertical supports 7, 8 are fixed to a joint 10 comprising two parts 11, 12 which can rotate with respect to each other, constructed using known technology employed in thrust bearings or flat ball joints.

Joint 10 is in turn reversibly attached to an attachment member 13 and can rotate with respect to the latter in a vertical plane.

The means used in the illustrated embodiment of the said reversible attachment comprise a pin 18 which passes through a series of holes Fi aligned along an axis L-L provided on parts of joint 10 and two wings 19, 20 which project downwards from a connecting member 13 which joins joint 10 to handles 3, 4 of the wheelbarrow. In the embodiment in question this connecting member comprises a bar 13b which can be attached to the ends of the said handles 3, 4 of wheelbarrow 1 by annularly shaped means 13s which can be housed within them, immobilizing them by means of one of various systems of a known type (fixing bolts, rings divided into several parts connected by means of threaded members, etc.).

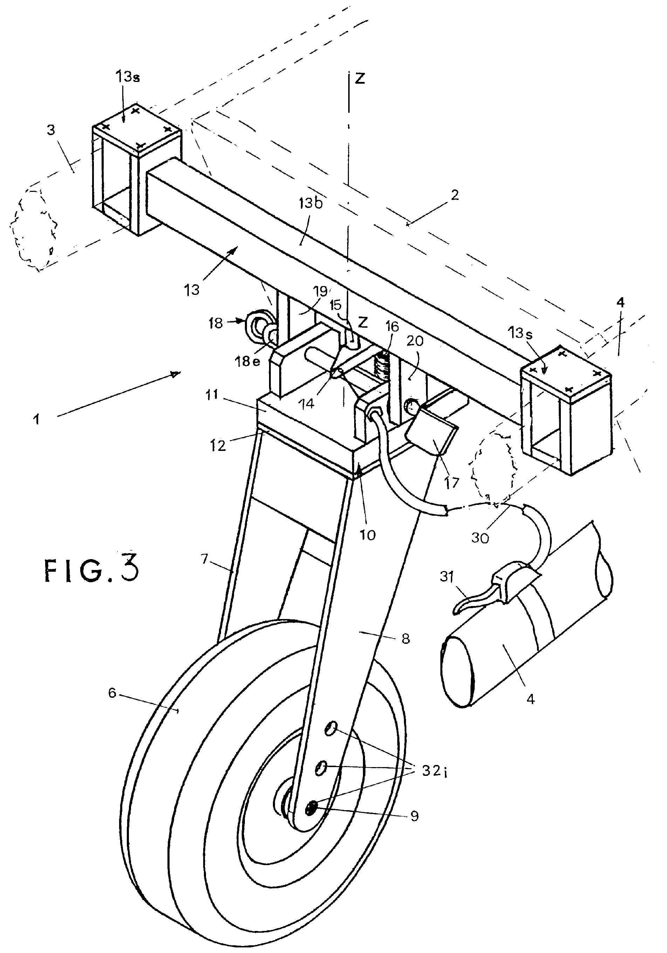

In order to immobilize joint 10 and prevent it from rotating in a vertical plane together with auxiliary wheel 6 with respect to wheelbarrow 1, the inventor has provided for the use of a hook 14 (see also Figure 3), arranged horizontally, of a U-shape which is open towards the position occupied by the user.

This hook 14, which is pivoted on joint 10 in such a way that it can rotate in a horizontal plane, has a clear 14s which complementarily engages a vertical member 15 which projects downwards from bar 13b forming part of said connecting member 13.

Clearly when hook 14 is attached to vertical member 15, auxiliary wheel 6 is stably attached to wheelbarrow 1 and can only rotate about a vertical axis.

In order to keep hook 14 engaged on vertical member 15 the inventor has provided that one or more flexible springs 16 with their ends connected to the hook and the joint should be fitted to the point at which it is pivoted on joint 10. If it is desired to disengage hook 14 so that auxiliary wheel 6 can rotate with respect to wheelbarrow 1 in such a way that the wheel is free and is not involved in supporting wheelbarrow 1 and does also not increase the height of handles 3, 4 above the ground, it is sufficient to manually disengage horizontally positioned hook 14, causing it to counter-rotate in such a way that its clear 14s moves away from vertical member 15. In order to render this operation easier, the inventor has bent the free end of one of the sides of the U, the one which does not include a clear, in a perpendicularly outward direction thus forming a branch 17 parallel to said connecting member 13 which can act as a handle or pedal to disengage hook 14 by overcoming the resistance of said spring or springs 16.

Another means for disengaging hook 14 from vertical member 15 may be that (see Figure 3) of exerting a tractive force on the side which does not include clear 14s by means of a cable 30 connected to a lever 31 secured to one of two handles 3, 4.

If at times in particular situations it is desired to detach auxiliary wheel 6 with its corresponding joint 10 from connecting member 13, this operation can be performed by virtue of the fact that joint 10 is connected to the connecting member by means of the simple pin 18 already described previously; it is sufficient to pull out the pin and the wheelbarrow will return temporarily to being a single-wheeled wheelbarrow.

In order to prevent said pin 18 from being withdrawn from already mentioned holes Fi when this is not desired, the inventor has provided pin 18 at at least one end 18e with means which will hold it fixed in its working position, but which can be readily disengaged.

A suggested system, which can be seen in Figure 2, is that of applying a locking pin 21 to one end of pin 18 perpendicular thereto, and in applying an elastic blade 22 to one 19 of the two wings 19, 20, incorporated therewith along one side and forming a vertical space 22V.

Once pin 18 is in position, it is sufficient to rotate it so that locking pin 21 can be forced into space 22V of blade 22 (a space which is made by mere bending). To disengage locking pin 21 and release pin 18 it is instead necessary for the user to carry out an actual manual disengaging operation, otherwise pin 18 will remain firmly fixed in holes Fi.

In Figure 2 locking pin 21 is shown as a dashed line in the position which permits pin 18 to be pulled out, and shown as a continuous line (in plan) in the position in which this is prevented.

To render the engagement of said hook 14 on vertical member 15 "automatic", so that this takes place only through the effect of the action exerted upon it by the assembly of auxiliary wheel 6 and joint 10 when wheel 6 is supported on the ground, the inventor has provided that the free unbent end of hook 14 should be constructed in such a way that when no force is exerted upon it it lies in a direction parallel to the longitudinal axis of wheelbarrow 1 facing said downwardly projecting vertical member 15 and has on one side a clear 14s of a shape which matches the shape of the transverse cross section of said vertical member 15, the side of hook 14 having the said clear 14s having its outermost terminal portion 14t bevelled at an angle such as to permit it to slide onto vertical member 15 as a result purely of the reaction force exerted by auxiliary wheel 6 on joint 10 on which it is pivoted when auxiliary wheel 6 is set on the ground and contributes to supporting wheelbarrow 1.

It is obvious that all the component parts of a wheelbarrow according to the invention may have different shapes, dimensions and relative positions from those considered hitherto in the case of the preferred embodiment described here without going beyond the scope of the protection conferred by this patent application.

## Claims

1. Wheelbarrow (1) comprising a body (2) to which are fixed two handles (3, 4), a wheel (5) in a forward position and an auxiliary wheel (6) located on the opposite side of the body (2) on the same side as the said handles (3, 4) and connected to the said wheelbarrow (1) in such a way that it is capable of rotating about a substantially vertical axis (Z-Z), characterized in that the said auxiliary wheel (6) has its axle (9) engaged in two vertical supports (7, 8) the upper ends of which are incorporated into a joint (10) comprising two parts (11, 12) which can rotate with respect to each other in an approximately horizontal plane, this joint (10) being reversibly attached so that it can rotate in a vertical plane to a connecting member (13) which can be secured to the said two handles (3, 4), the said joint (10) being provided with manually operable means (14) which can reversibly fixedly secure the joint (10) and the said connecting member (13) preventing them from rotating with respect to each other in a vertical plane.

2. Wheelbarrow according to Claim 1, in which the said means to render joint (10) and connecting member (13) reversibly fixed comprise a horizontally extending hook (14) pivoted on the said joint (10) in such a way that it can rotate with respect to it in a horizontal plane, the said hook (14) reversibly engaging a vertical member (15) downwardly projecting from the said connecting member (13) by means of rotation in a horizontal plane.

3. Wheelbarrow according to Claim 2, in which the said horizontally positioned hook (14) is provided at the point where it is hinged onto the joint (10) with one or more springs (16) which hold it attached to the said vertical member (15) when no external force is applied to the hook (14).

4. Wheelbarrow according to one of Claims 2 or 3, in which the said horizontally positioned hook (14) can be caused to rotate in a horizontal plane through the action of a cable (30) connected to an operating lever (31) fixed to one (4) of the said two handles (3, 4) of the wheelbarrow (1).

5. Wheelbarrow according to one of Claims 2 or 3, in which the said horizontally positioned hook (14) has a U-shape, one of the sides of which is folded outwards at its free end in a direction parallel to the plane of the said U in such a way as to form a branch (17) which is parallel to the said connecting member (13) which when pressed by a force parallel to the plane of the said U which overcomes the resistance of the said one or more springs (16) causes the horizontally positioned hook (14) to rotate so that it disengages from the said vertical member (15) projecting from the connecting member (13).

6. Wheelbarrow according to any one of Claims 2 to 5, in which the free end of the said horizontally positioned hook (14) which is not bent outwards has a direction parallel to the longitudinal axis of the wheelbarrow (1) facing the said downwardly projecting vertical member (15) when no force is exerted upon it and has on one side a clear (14s) of a shape which matches the shape of the transverse cross section of the vertical member (15), the side of the hook (14) having the said clear (14s) having its outermost terminal portion (14t) bevelled to an angle such as to permit it to slide onto the vertical member (15) purely through the reaction force exerted by the auxiliary wheel (6) on the joint (10) to which it is pivoted when the auxiliary wheel (6) is supported on the ground and contributes to supporting the wheelbarrow (1).

7. Wheelbarrow according to one of the foregoing claims in which the said joint (10) is reversibly connected to the said connecting member (13) in such a way that it can rotate with respect to it in a vertical plane through a removable pin (18) which passes through a series of aligned holes (Fi) provided on parts of the said joint (10) and on two wings (19, 20) or downward projections from the connecting member (13).

8. Wheelbarrow according to Claim 7 in which the said removable pin (18) is provided on at least one of its ends (18e) with means (21,22) to prevent it from being drawn out from the said series of holes (Fi).

9. Wheelbarrow according to Claim 8 in which the said means capable of preventing the pin (18) from being drawn out comprises a locking pin (21) perpendicular to one end of the pin (18) and an elastic blade (22) which is incorporated along one side to one (19) of the said wings (19, 20) from the connecting member, bent so as to form a space (22v) capable of housing the said locking pin (21) when this is forcefully inserted between the elastic blade (22) and the said wing (19) on the side of the latter which is opposite the side incorporated with the wing (19).

10. Wheelbarrow according to one of the foregoing claims in which the said connecting member (13) comprises a bar (13b) terminating at the ends in annular shape (13s) which are capable of being connected to the said handles (2, 3) of the wheelbarrow (1).

11. Wheelbarrow according to any one of the foregoing claims, in which the said vertical supports (7, 8) in which the axle (9) of the auxiliary wheel (16) engages have several holes (32i) aligned along a longitudinal axis to permit the said axle to be inserted in different positions along the said axis.
